# EUROPÄISCHE PATENTANMELDUNG

(11) **EP 0 811 841 A1**
(43) Veröffentlichungstag der Anmeldung: **10.12.1997**
(21) Anmeldenummer: 97810341.4
(22) Anmeldetag: 04.06.1997
(51) Int. Cl.: G01N 27/49

(54) **Elektrochemische Gassensor-Anordnung**

(30) Priorität: 06.06.1996 EP 96810368; 13.02.1997 EP 97810079
(71) Anmelder: ENDRESS + HAUSER CONDUCTA GESELLSCHAFT FÜR MESS UND REGELTECHNIK mbH & Co., D-70839 Gerlingen (DE)
(72) Erfinder: Kurbel, Gerhard, 87488 Betzigau (DE)
(74) Vertreter: Morstadt, Volker, Dipl.-Ing. c/o Endress + Hauser Flowtec AG

(57) **Zusammenfassung**

Im Hinblick auf gute Auswechselbarkeit und auf bessere Anpassung und Einsetzbarkeit von Gassensoren unterschiedlicher Lieferanten sowie auf die Reduzierung der Anzahl unterschiedlicher Gaszufuhr-Anordnungen weist die elektrochemische Gassensor-Anordnung einen Gassensor (10) mit einer ersten Hauptachse (13) auf, der in einem Gehäuse (1) mit einem Gas-Ein/Auslaß (2) ein Sensorelement (3) enthält, das einen Elektrolyten (31) sowie mindestens eine Arbeitselektrode (32) und eine Referenz/Gegenelektrode (33) mit einer jeweiligen äußeren Zuleitung (32', 33') umfaßt. Ferner weist die Gassensor-Anordnung ein Zwischenelement (4) mit einer zweiten Hauptachse (43) auf, über das der Gassensor an einer Gaszufuhr-Anordnung (5) für ein Gasgemisch, das ein zu messendes Gas enthält, auch in Richtung der fluchtenden beiden Hauptachsen dauernd mechanisch fest, jedoch leicht lösbar befestigt ist.

## Beschreibung

Die Erfindung betrifft eine elektrochemische Gassensor-Anordnung, die einen elektrochemischen Gassensor enthält.

Handelsübliche Gassensoren sind bisher hinsichtlich ihrer äußeren Form und deren Abmessungen einerseits nicht standardisiert. Andererseits muß der Benutzer die Gassensoren an einer eigenen und daher ebenfalls nicht standardisierten Gaszufuhr-Anordnung befestigen, wobei bisher der leichten und guten Auswechselbarkeit keine Beachtung geschenkt wurde; die Gassensoren wurden nämlich meist mittels mehreren sie durchdringenden Schrauben an der Gaszufuhr-Anordnung festgeschraubt.

So beschreibt die DE-A 30 00 410 einen eine erste Hauptachse aufweisenden Gaskonzentrations-Sensor mit einer Meßkammer,
- die in einem Gehäuse mit einem mittels mehrerer Schrauben daran befestigten Deckel unauswechselbar angeordnet ist und einen Gas-Ein/Auslaß aufweist,
- welches Gehäuse seinerseits an einer als Gaszufuhr-Anordnung dienenden, eine zweite Hauptachse aufweisenden Schutzeinrichtung mittels einer Innen-/Außengewinde-Verbindung befestigt ist,
- wobei dei beiden Hauptachsen fluchten.

Ferner beschreibt die GB-A 20 53 482 eine elektrochemische Gassensor-Anordnung für die Messung von in einem Fluid gelöstem Wasserstoff
- mit einem eine erste Hauptachse aufweisenden Gassensor,
   -- der in einem Gehäuse mit einem als nur für Wasserstoff durchlässige Membran ausgebildeten Gas-Ein/Auslaß ein Sensorelement enthält,
      --- das einen Elektrolyten sowie mindestens eine Arbeitselektrode und eine Referenz/Gegenelektrode mit einer jeweiligen äußeren Zuleitung umfaßt, und
- mit einem eine zweite Hauptachse aufweisenden Zwischenelement, über das der Gassensor an einer Fluidzufuhr-Anordnung mittels Schrauben dauernd befestigt ist,
   -- wobei die beiden Hauptachsen fluchten.

Auch die GB-A 15 85 631 beschreibt eine elektrochemische Gassensor-Anordnung
- mit einem eine erste Hauptachse aufweisenden Gassensor,
   -- der in einem Gehäuse mit einem Gas-Ein/Auslaß ein Sensorelement enthält,
      --- das einen Elektrolyten sowie mindestens eine Arbeitselektrode und eine Referenz/Gegenelektrode mit einer jeweiligen äußeren Zuleitung umfaßt, und
- mit einem eine zweite Hauptachse aufweisenden Zwischenelement, über das der Gassensor an einer Gaszufuhr-Anordnung mittels Schrauben dauernd befestigt ist,
   -- wobei die beiden Hauptachsen fluchten.

Schließlich beschreibt die US-A 47 42 708 eine Anordnung für die Kalibrierung eines eine erste Hauptachse aufweisenden elektrochemischen Gassensors,
- der in einem Gehäuse mit einem Gas-Ein/Auslaß ein Sensorelement enthält,
   -- das einen Elektrolyten sowie mindestens eine Arbeitselektrode und eine Referenz/Gegenelektrode mit einer jeweiligen äußeren Zuleitung umfaßt,
- wobei ein eine zweite Hauptachse aufweisendes Zwischenelement, über das der Gassensor an einer Gaszufuhr-Anordnung für ein Kalibriergas nur während der Kalibrierung vorübergehend mittels einer Klett-Verbindung oder mittels einer Dauermagnet-Verbindung befestigt ist, die jeweils nur in Richtung der beiden Hauptachsen, die fluchten, leicht lösbar ist.

Wenn der Benutzer Gassensoren von mehreren Lieferanten einsetzt, muß er auch unterschiedlich geformte und dimensionierte, meist im Selbstbau hergestellte Gaszufuhr-Anordnungen vorsehen, da die Abmessungen von Gassensoren bisher nicht standardisiert sind. Ferner müssen die Gassensoren an der jeweiligen Gaszufuhr-Anordnung so befestigt sein, daß sich der Gassensor von der Gaszufuhr-Anordnung während des Meßbetriebs nicht löst. Beide Teile müssen also eine kompakte Meßanordnung bilden.

Es besteht daher einerseits ein Bedürfnis, sowohl im Hinblick auf eine bessere Anpassung und Einsetzbarkeit von Gassensoren unterschiedlicher Lieferanten als auch im Hinblick auf die Reduzierung der Anzahl unterschiedlicher Gaszufuhr-Anordnungen, also insgesamt im Hinblick auf eine Vereinheitlichung, eine verbesserte Gassensor-Anordnung zu schaffen.

Es besteht andererseits das in Zusammenhang mit diesem Bedürfnis stehende weitere Bedürfnis, daß verbrauchte oder defekte Gassensoren leicht auswechselbar sein sollen. Gerade dieses Erfordernis läßt sich bei den oben referierten Gassensor-Anordnungen des Standes der Technik nicht erfüllen, denn sie sind alle verschraubt, außer was die Gassensor-Anordnung mit der Klett-Verbindung angeht; diese Verbindung ist jedoch entsprechend ihrer Bestimmung, nur vorübergehend eine Kalibrierung zu ermöglichen, per se nicht für einen Dauerbetrieb über lange Zeiten geeignet.

Zur Erfüllung dieser Bedürfnisse besteht die Erfindung daher in einer elektrochemischen Gassensor-Anordnung, die
- einen eine erste Hauptachse aufweisenden Gassensor und
- ein eine mit der ersten Hauptachse fluchtende zweite Hauptachse aufweisendes Zwischenelement umfaßt,
   -- welcher Gassensor in einem Gehäuse mit einem Gas-Ein/Auslaß ein Sensorelement enthält,
      --- das einen Elektrolyten sowie mindestens eine Arbeitselektrode und eine Referenz/Gegenelektrode mit einer jeweiligen äußeren Zuleitung umfaßt, und
   -- über welches Zwischenelement der Gassensor an einer Gaszufuhr-Anordnung für ein Gasgemisch, das ein zu messendes Gas enthält, auch in Richtung der fluchtenden Hauptachsen dauernd mechanisch fest, jedoch leicht lösbar, ohne dazu ein Hilfsmittel benutzen zu müssen, befestigt ist.

Nach einer ersten Weiterbildung der Erfindung weist die elektrochemische Gassensor-Anordnung einen Filter auf,
- der das mit der Gassensor-Anordnung zu messende Gas im wesentlichen passieren läßt, dagegen andere Gase, für die das Sensorelement zusätzlich zum zu messenden Gas auch empfindlich ist, praktisch zurückhält, und
- der zwischen dem Gas-Ein/Auslaß, der keine Diffusionsbarriere für das zu messende Gas darstellt, und dem Zwischenelement angeordnet ist.

Dabei ist bevorzugt der Filter auf einer der Gaszufuhr-Anordnung oder dem Sensorelement zugewandten Seite mit einer Diffusionsbarriere für das Gasgemisch versehen.

Nach einer zweiten Weiterbildung der Erfindung weist die elektrochemische Gassensor-Anordnung einen Filter auf,
- der das mit der Gassensor-Anordnung zu messende Gas im wesentlichen passieren läßt, dagegen andere Gase, für die das Sensorelement zusätzlich zum zu messenden Gas auch empfindlich ist, praktisch zurückhält, und
- der zwischen dem Gas-Ein/Auslaß, der als Diffusionsbarriere für das zu messende Gas ausgebildet ist, und dem Zwischenelement angeordnet ist.

Nach einer dritten Weiterbildung der Erfindung weist die elektrochemische Gassensor-Anordnung einen Filter auf,
- der das mit der Gassensor-Anordnung zu messende Gas im wesentlichen passieren läßt, dagegen andere Gase, für die das Sensorelement zusätzlich zum zu messenden Gas auch empfindlich ist, praktisch zurückhält und
- der innerhalb des Gassensors zwischen dessen Gasein/ Auslaß, der als Diffusionsbarriere für das Gasgemisch ausgebildet ist, und dem Sensorelement angeordnet ist oder
- der innerhalb des Gassensors zwischen dessen Gasein/ AuslaB, der keine Diffusionsbarriere für das Gasgemisch darstellt, und dem Sensorelement angeordnet ist,
   -- in welchem Fall der Filter
      --- entweder ebenfalls keine Diffusionsbarriere aufweist
      --- oder auf einer der Gaszufuhr-Anordnung oder dem Sensorelement zugewandten Seite mit einer Diffusionsbarriere für das Gasgemisch versehen ist.

Bei elektrochemischen Gassensoren ist die Verwendungen von Filtern an sich bekannt, vgl. z.B. die EP-A 531 745, bei der der Filter allerdings fest in das Gehäuse dieses Gassensors eingebaut ist.

Nach einer ersten Ausgestaltung der Erfindung bzw. jeder der drei erwähnten Weiterbildungen sind der Gassensor und das Zwischenelement mittels einer Gewindeverbindung, insb. mittels eines Schraubengewindes am Gassensor und mittels eines dazu passenden Mutterngewindes am Zwischenelement, fest, jedoch leicht lösbar miteinander verbunden.

Nach einer zweiten Ausgestaltung der Erfindung bzw. jeder der drei erwähnten Weiterbildungen ist der Gassensor mit einem ersten Teil eines Bajonettverschlusses und das Zwischenelement mit einem zugehörigen zweiten Teil des Bajonettverschlusses versehen.

Nach einer dritten Ausgestaltung der Erfindung bzw. jeder der drei erwähnten Weiterbildungen ist das Zwischenelement mit einem Schnappverschluß versehen, der den Gassensor bzw. den Gassensor und den Filter im eingerasteten Zustand umgreift.

Nach einer vierten Ausgestaltung der Erfindung bzw. jeder der drei erwähnten Weiterbildungen ist das Zwischenelement mit klappbaren Bügelfedern versehen, die den Gassensor bzw. den Gassensor und den Filter im verbundenen Zustand umgreiten.

Nach einer fünften Ausgestaltung der Erfindung bzw. jeder der drei erwähnten Weiterbildungen ist der Gassensor seitlich mit, insb. federnden, Vorsprüngen versehen, die in entsprechende seitliche Vertiefungen des Zwischenelements einrasten, oder umgekehrt.

Nach einer bevorzugten Ausgestaltung der fünften Ausgestaltung sind die Vorsprünge als ein Ringwulst und die Vertiefungen als eine zum Ringwulst passende Ringnut ausgebidet.

Nach einer weiteren Ausgestaltung der Erfindung, der erwähnten drei Weiterbildungen oder der erwähnten fünf Ausgestaltungen können der Gassensor und das Zwischenelement jeweils zylindrisch sein.

Nach einer weiteren Ausgestaltung der Erfindung, der erwähnten drei Weiterbildungen oder der erwähnten fünf Ausgestaltungen oder der bevorzugten Ausgestaltung kann das Gehäuse aus einem Gehäusetopf und einem Gehäusedeckel bestehen.

Nach einer weiteren Ausgestaltung der erwähnten Weiterbildungen in Verbindung mit der erwähnten fünften Ausgestaltung der Erfindung kann der Filter an oder in einer Innenseite des Deckelteils gehaltert sein.

Nach einer vierten Weiterbildung der Erfindung mit zylindrischen Gassensoren und mit einem jeweiligen zylindrischen Zwischenelement können die einzelnen Gassensoren von Exemplar zu Exemplar unterschiedliche Außen-Durchmesser haben, deren Werte zwischen einem Maximalwert und einem Minimalwert liegen, und das jeweilige Zwischenelement hat immer einen Innen-Durchmesser, der gleich dem Maximalwert ist, und es ist jeweils ein Zwischenring vorgesehen, dessen radiale Breite gleich der Differenz zwischen dem Wert des Maximalwerts des Innen-Durchmessers des Zwischenelements und dem jeweiligen Außen-Durchmesser des Gassensors ist.

Die Erfindung wird nun anhand der nicht-maßstäblichen Figuren der Zeichnung näher erläutert, in der u.a. Ausführungsbeispiele dargestellt sind, wobei Bezugszeichen, die in einer Figur bereits angegeben sind, der Übersichtlichkeit halber in folgenden Figuren soweit wie möglich nicht mehr erscheinen.
- Fig. 1: zeigt schematisch im Schnitt den prinzipiellen Aufbau eines Gassensors,
- Fig. 2: zeigt schematisch im Schnitt den prinzipiellen Aufbau eines Gassensors mit einer Diffusionsbarriere in einem Gas-Ein/Auslaß,
- Fig. 3: zeigt schematisch im Schnitt ein erstes Ausführungsbeispiel, und zwar mit einem Gassensor nach Fig. 1,
- Fig. 4: zeigt schematisch im Schnitt eine erste Variante eines zweiten Ausführungsbeispiel, und zwar mit einem Gassensor, der eine Diffusionsbarriere benötigt,
- Fig. 5: zeigt schematisch im Schnitt eine zweite Variante des zweiten Ausführungsbeispiel mit dem eine Diffusionsbarriere benötigenden Gassensor,
- Fig. 6: zeigt schematisch im Schnitt eine dritte Variante des zweiten Ausführungsbeispiel mit dem eine Diffusionsbarriere benötigenden Gassensor,
- Fig. 7: zeigt schematisch im Schnitt eine vierte Variante des zweiten Ausführungsbeispiel mit dem eine Diffusionsbarriere benötigenden Gassensor,
- Fig. 8: zeigt schematisch im Schnitt eine bei dem in Fig. 1 dargestellten Gassensor anwendbare besonders günstige Ausführungsform mit einem Gehäusetopf und einem Gehäusedeckel,
- Fig. 9: zeigt schematisch im Schnitt eine bei dem in Fig. 2 dargestellten Gassensor anwendbare besonders günstige Ausführungsform mit einem Gehäusetopf und einem Gehäusedeckel,
- Fig. 10: zeigt schematisch im Schnitt eine bei dem in Fig. 3 dargestellten Gassensor anwendbare besonders günstige Ausführungsform mit einem Gehäusetopf und einem Gehäusedeckel,
- Fig. 11: zeigt schematisch im Schnitt eine bei dem in Fig. 4 dargestellten Gassensor anwendbare besonders günstige Ausführungsform mit einem Gehäusetopf und einem Gehäusedeckel,
- Fig. 12: zeigt schematisch im Schnitt eine bei dem in Fig. 5 dargestellten Gassensor anwendbare besonders günstige Ausführungsform mit einem Gehäusetopf und einem Gehäusedeckel,
- Fig. 13: zeigt schematisch im Schnitt eine bei dem in Fig. 6 dargestellten Gassensor anwendbare besonders günstige Ausführungsform mit einem Gehäusetopf und einem Gehäusedeckel,
- Fig. 14: zeigt schematisch im Schnitt eine bei dem in Fig. 7 dargestellten Gassensor anwendbare besonders günstige Ausführungsform mit einem Gehäusetopf und einem Gehäusedeckel,
- Fig. 15: zeigt schematisch im Schnitt ein erstes Ausführungsbeispiel einer leicht lösbaren Befestigung von Zwischenelement und Gassensor, nämlich eine Schraubverbindung,
- Fig. 16: zeigt schematisch im Schnitt ein zweites Ausführungsbeispiel einer leicht lösbaren Befestigung von Zwischenelement und Gassensor, nämlich einen Bajonettverschluß,
- Fig. 17: zeigt schematisch im Schnitt ein drittes Ausführungsbeispiel einer leicht lösbaren Befestigung von Zwischenelement und Gassensor, nämlich einen Schnappverschluß,
- Fig. 18: zeigt schematisch im Schnitt ein viertes Ausführungsbeispiel einer leicht lösbaren Befestigung von Zwischenelement und Gassensor, nämlich eine Verbindung mittels Bügelfedern,
- Fig. 19: zeigt schematisch im Schnitt ein fünftes Ausführungsbeispiel einer leicht lösbaren Befestigung von Zwischenelement und Gassensor, nämlich eine Rastverbindung, und
- Fig. 20: zeigt schematisch im Schnitt ein weiteres Ausführungsbeispiel für unterschiedliche Durchmesser von Gassensor und Zwischenelement.

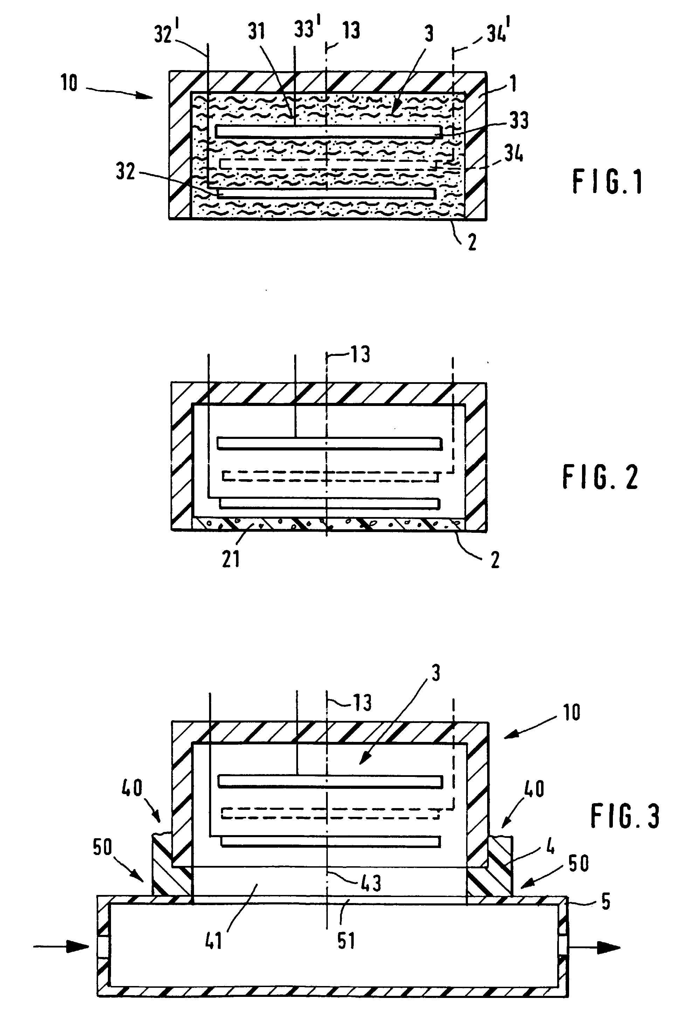

In Fig. 1 ist zunächst schematisch im Schnitt der prinzipielle Aufbau eines bevorzugt zylindrischen Gassensors 10 gezeigt, der eine erste Hauptachse 13 hat. In einem, z.B. aus einem geeigneten Kunststoff bestehenden, Gehäuse 1 mit einem Gas-Ein/Auslaß 2 befindet sich ein Sensorelement 3, das einen Elektrolyten 31 sowie eine Arbeitselektrode 32 und eine Referenz/ Gegenelektrode 33 mit einer jeweiligen äußeren Zuleitung 32', 33' umfaßt.

In Fig. 1 ist gestrichelt eine mögliche dritte Elektrode 34 mit einer äußeren Zuleitung 34' gezeigt, die, wenn sie bei einem konkreten Gassensor vorhanden ist, die separate Funktion einer Referenzelektrode hat, wobei dann die Referenz/Gegenelektrode 33 nur als reine Gegenelektrode wirkt. Es können nach Bedarf auch noch weitere Elektroden vorgesehen werden.

Der Gas-Ein/Auslaß 2 kann je nach dem Gas, für dessen Messung der Gassensor 10 bestimmt und ausgelegt ist, entweder offen, insbesondere also keine Diffusionsbarriere für das zu messende Gas, sein, wie dies die Fig. 1 zeigt, oder der Gas-Ein/Auslaß 2 ist als Diffusionsbarriere 21, die z.B. Kapillaren enthalten kann, für das zu messende Gas auszubilden, wie dies Fig. 2 zeigt.

Elektrochemische Gassensoren für die Konzentrationsmessung von Komponenten eines Gasgemisches, wie z.B. von Kohlenmonoxid, Stickstoffmonoxid, Schwefeldioxid, Schwefelwasserstoff, Sauerstoff, Ammoniak oder Hydrazin, haben i.a. eine Diffusionsbarriere, insb. wenn höhere Gaskonzentrationen zu messen sind und wenn eine möglichst lineare Abhängigkeit des elektrischen Gassensor-Stroms von der Gaskonzentration bei dessen geringer Temperatur-Abhängigkeit erwünscht ist.

Wenn die Konzentration des zu messenden Gases im Gasgemisch sehr gering ist, wie z.B. bei der Messung von Ozon, Chlor, Fluor, Chlorwasserstoff oder Blausäuregas (Zyan), ist i.a. eine Diffusionsbarriere nicht erforderlich.

In Fig. 3 ist schematisch im Schnitt ein erstes Ausführungsbeispiel der Erfindung mit einem Gassensor nach Fig. 1 gezeigt. Der Gassensor 10 ist an einer Gaszufuhr-Anordnung 5 für ein Gasgemisch, das das zu messende Gas enthält, über ein Zwischenelement 4, das eine zweite Hauptachse 43 hat, auch in Richtung der fluchtenden beiden Hauptachsen 13, 43 dauernd mechanisch fest, jedoch leicht lösbar befestigt, ohne daß dazu ein Hilfsmittel, wie z.B. ein Schraubendreher o.ä., benutzt werden müßte. Die dauernd mechanisch feste Verbindung kann also mit bloßen Händen gelöst werden.

Unter einer 'dauernd' festen Verbindung wird im Rahmen der Erfindung eine Befestigung bzw. Verbindung verstanden, die solange mechanisch fest ist, wie sie nicht gewollt gelöst wird. Das ist z.B. dann erforderlich und gewollt, wenn ein defekter oder ein verbrauchter Gassensor durch einen neuen ersetzt werden muß.

Das Zwischenelement 4 hat eine den Gas-Ein/Auslaß 2 praktisch überdeckende Öffnung 41. Auch die Gaszufuhr-Anordnung 5 hat eine entsprechende Öffnung 51, die die Öffnung 41 ebenfalls praktisch überdeckt.

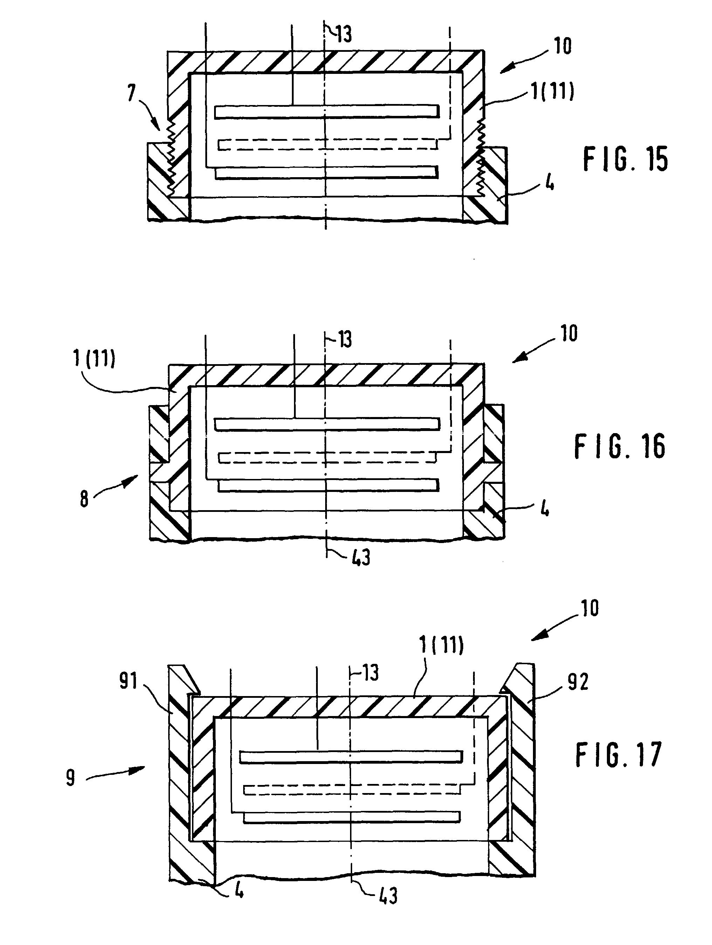

Da in den Fig. 15 bis 19 verschiedene bevorzugte Arten von auch in Richtung der fluchtenden beiden Hauptachsen 13, 43 dauernd mechanisch festen, leicht lösbaren Befestigungen noch näher dargestellt und erläutert werden, sind diese in Fig. 3 nur durch das Bezugszeichen 40 symbolisiert. Zwischenelement 4 und Gaszufuhr-Anordnung 5 sind bei 50 mechanisch nur erschwert lösbar miteinander verbunden, wie z.B. mittels mehrerer Durchsteckschrauben mit jeweiliger Gegenmutter oder mittels Schneidschrauben.

Die Gaszufuhr-Anordnung 5 wird vom erwähnten, das zu messende Gas enthaltenden Gasgemisch durchströmt, wie durch die Pfeile angedeutet ist. Da in Fig. 3 eine Gassensor-Anordnung mit einem Gassensor 10 nach Fig. 1, also mit einem Gassensor ohne Diffusionsbarriere am oder im Gas-Ein/Auslaß 2 dargestellt ist, gelangt das im Gasgemisch enthaltene, zu messende Gas aus der Gaszufuhr-Anordnung 5 direkt durch die Öffnungen 51, 41 und durch den Gas-Ein/Auslaß 2 hindurch zum Sensorelement 3.

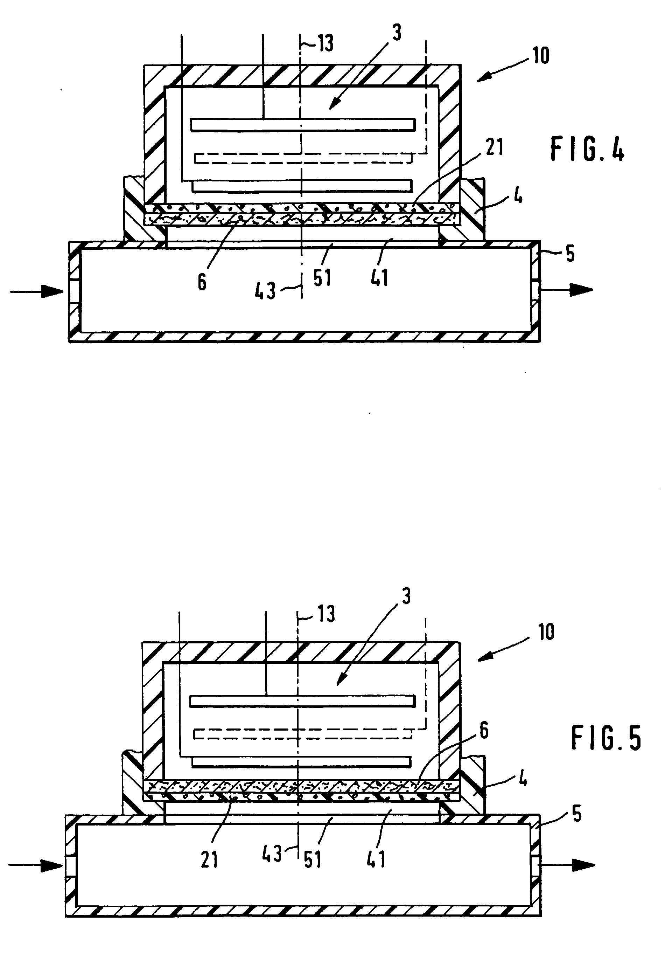

In Fig. 4 ist schematisch im Schnitt eine erste Variante eines zweiten Ausführungsbeispiels gezeigt, und zwar mit einem Gassensor, der eine Diffusionsbarriere benötigt.

Zunächst ist ein Filter 6 vorgesehen, der das zu messende Gas im wesentlichen passieren läßt, dagegen andere Gase, für die das Sensorelement zusätzlich zum zu messenden Gas auch empfindlich ist, praktisch zurückhält.

Der Filter 6 ist zwischen dem Gas-Ein/Auslaß 2, der keine Diffusionsbarriere für das zu messende Gas darstellt, und dem Zwischenelement 4 angeordnet und auf einer der Gaszufuhr-Anordnung 5 abgewandten Seite mit der Diffusionsbarriere 21 für das Gasgemisch versehen. Somit können bei Bedarf der Filter 6 und der Gassensor 10 infolge der erwähnten Weise dauernd mechanisch festen, jedoch leicht lösbaren Befestigung entweder allein oder zusammen ausgewechselt werden.

Das im Gasgemisch enthaltene, zu messende Gas gelangt bei der Ausführungsbeispiel-Variante nach Fig. 4 zunächst aus der Gaszufuhr-Anordnung 5 durch die Öffnungen 41, 51 hindurch zum Filter 6 und nach deren Durchtritt dann durch die Diffusionsbarriere 21 und den Gas-Ein/Auslaß 2 hindurch zum Sensorelement 3.

In Fig. 5 ist schematisch im Schnitt eine zweite Variante eines zweiten Ausführungsbeispiels gezeigt, und zwar mit einem Gassensor, der eine Diffusionsbarriere benötigt. Gegenüber der ersten Variante nach Fig. 4 ist die Reihenfolge von Filter 6 und Diffusionsbarriere 21 vertauscht. Somit liegt diese zur Gaszufuhr-Anordnung 5 hin, während der Filter 6 zum Sensorelement 3 hin liegt.

Bei der Ausführungsbeispiel-Variante nach Fig. 5 gelangt das im Gasgemisch enthaltene, zu messende Gas zunächst aus der Gaszufuhr-Anordnung 5 durch die Öffnungen 41, 51 hindurch zur Diffusionsbarriere 21 und nach deren Durchtritt dann durch den Filter 6 und den Gas-Ein/Auslaß 2 hindurch zum Sensorelement 3.

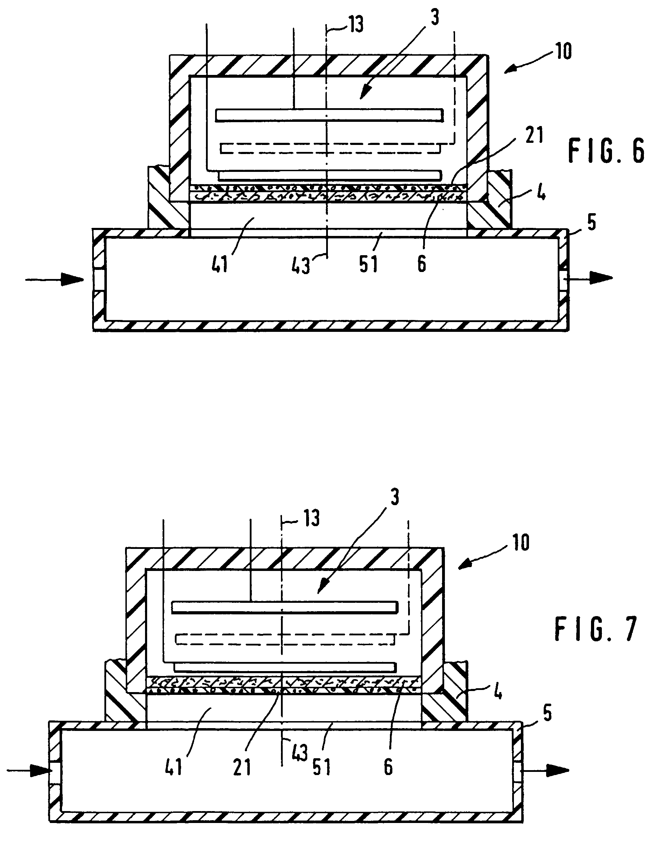

In Fig. 6 ist schematisch im Schnitt eine dritte Variante des zweiten Ausführungsbeispiels gezeigt, und zwar wiederum mit einem Gassensor, der eine Diffusionsbarriere benötigt. Auch hier ist wie bei den Fig. 4 und 5 ein Filter 6 mit den oben genannten Eigenschaften vorgesehen.

Nun ist der Filter 6 jedoch innerhalb des Gassensors zwischen dessen Gas-Ein/Auslaß 2, der nicht als Diffusionsbarriere für das Gasgemisch ausgebildet ist, und dem Sensorelement 3 angeordnet. Der Filter 6 liegt auf der Seite des Gas-Ein/Auslasses 2, während die Diffusionsbarriere 21 auf der dem Sensorelement zugewandten Seite des Filters sicn befindet.

Die Diffusionsbarriere 21 kann entweder als selbständiges Bauteil vorgesehen sein, oder der Filter 6 kann auf seiner Innenseite mit der Diffusionsbarriere versehen oder als Diffusionsbarriere ausgebildet sein.

Das im Gasgemisch enthaltene, zu messende Gas gelangt bei der Ausführungsbeispiel-Variante nach Fig. 6 zunächst aus der Gaszufuhr-Anordnung 5 durch die Öffnungen 41, 51 und den Gas-Ein/Auslaß 2 hindurch zum Filter 6 und nach dessen Durchtritt dann durch die Diffusionsbarriere 21 hindurch zum Sensorelement 3.
In Fig. 7 ist schematisch im Schnitt eine vierte Variante des zweiten Ausführungsbeispiels gezeigt, und zwar wiederum mit einem Gassensor, der eine Diffusionsbarriere benötigt. Auch hier ist wie bei den Fig. 4 bis 6 ein Filter 6 mit den oben genannten Eigenschaften vorgesehen.

Nun ist der Filter 6 wie in Fig. 6 wieder innerhalb des Gassensors zwischen dessen Gas-Ein/Auslaß 2, der als Diffusionsbarriere 21 für das Gasgemisch ausgebildet sein kann, und dem Sensorelement 3 angeordnet. Wenn letzteres nicht der Fall ist, kann die der Gaszufuhr-Anordnung zugewandte Seite des Filters 6 mit der Diffusionsbarriere 21 versehen oder als Diffusionsbarriere ausgebildet sein.

Das im Gasgemisch enthaltene, zu messende Gas gelangt bei der Ausführungsbeispiel-Variante nach Fig. 7 zunächst aus der Gaszufuhr-Anordnung 5 durch die Öffnungen 41, 51 und den Gas-Ein/Auslaß 2 hindurch zur Diffusionsbarriere 21 und nach deren Durchtritt dann durch den Filter 6 hindurch zum Sensorelement 3.

Bei den Anordnungen nach den Fig. 6 und 7 entfällt gegenüber denen der Fig. 4 und 5 jeweils die wahlweise Auswechelbarkeit von Filter 6 und/oder Sensorelement; vielmehr sind nun nur noch beide zusammen austauschbar.

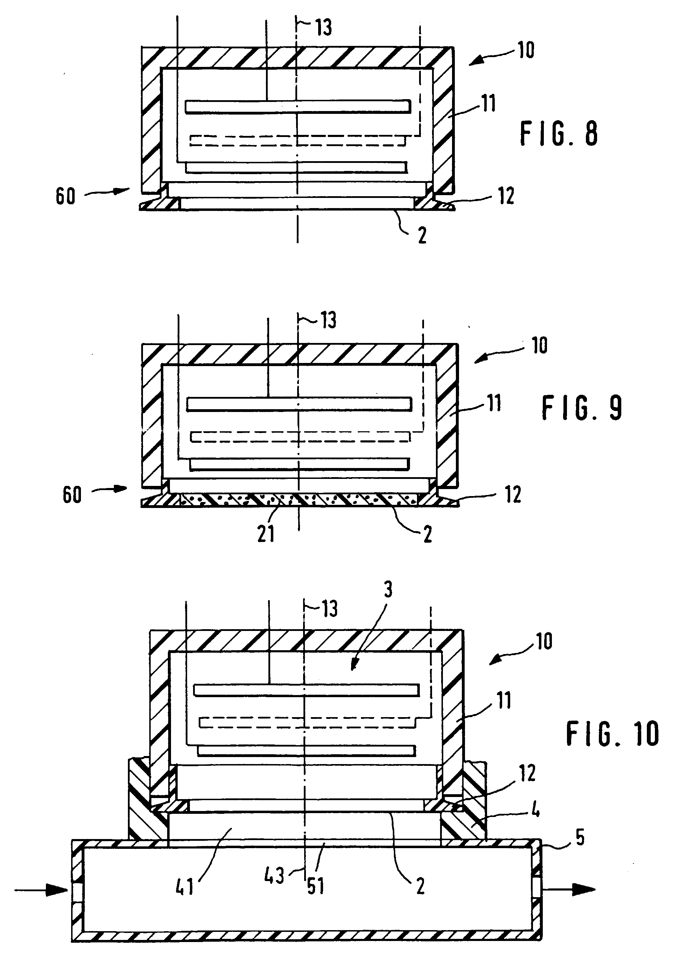

In den Fig. 8 bis 14 sind schematisch im Schnitt bei jedem der in den Fig. 1 bis 7 dargestellten Gassensoren anwendbare besonders günstige Ausführungsformen gezeigt. Das bisher einteilig vorausgesetzte Gehäuse 1 besteht nun aus einem Gehäusetopf 11 und aus einem Gehäusedeckel 12.

Die Fig. 8 zeigt dies für einen Gassensor 10 nach Fig. 1, bei dem also der Gas-Ein/Auslaß 2 im Deckelteil 12 offen ist und somit keine Diffusionsbarriere für das zu messende Gas darstellt. Die Fig. 9 zeigt dies dagegen für einen Gassensor 10 nach Fig. 2, bei dem also der Gas-Ein/Auslaß 2 im Deckelteil 12 als Diffusionsbarriere 21 für das zu messende Gas ausgebildet ist.

Die Fig. 10 zeigt, daß auch eine Anordnung nach Fig. 3 mit einem in Gehäusetopf 11 und Gehäusedeckel 12 geteilten Gehäuse realisiert werden kann. Über das Zwischenelement 4 sind Gehäusedeckel 12 und Gehäusetopf 11 mit der Gaszufuhr-Anordnung 5 in der erwähnten Weise dauernd mechanisch fest, jedoch leicht lösbar verbunden.

Da in Fig. 10 eine Gassensor-Anordnung mit einem Gassensor 10 nach Fig. 1, also mit einem Gassensor ohne Diffusionsbarriere am oder im Gas-Ein/Auslaß 2 dargestellt ist, gelangt das im Gasgemisch enthaltene, zu messende Gas aus der Gaszufuhr-Anordnung 5 durch die Öffnungen 41, 51 und durch den Gas-Ein/Auslaß 2 hindurch, der nunmehr im Gehäusedeckel 12 angeordnet ist, zum Sensorelement 3.

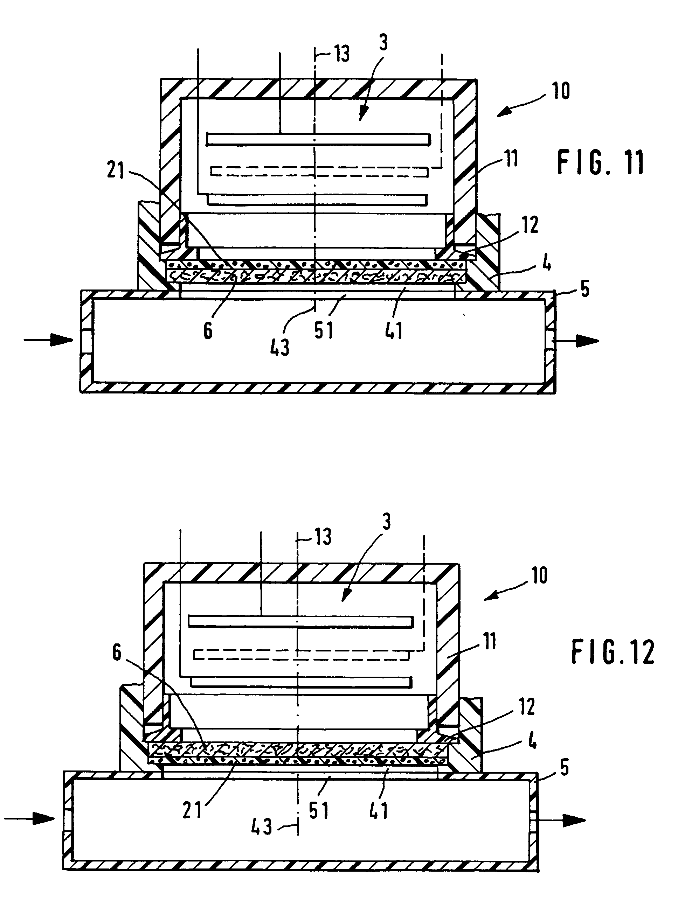

Die Fig. 11 zeigt, daß auch eine Anordnung nach Fig. 4 mit einem in Gehäusetopf 11 und Gehäusedeckel 12 geteilten Gehäuse realisiert werden kann. Über das Zwischenelement 4 sind Gehäusedeckel 12 und Gehäusetopf 11 mit der Gaszufuhr-Anordnung 5 auch in Richtung der fluchtenden beiden Hauptachsen 13, 43 dauernd mechanisch fest, jedoch leicht lösbar verbunden.

In Fig. 11 ist schematisch im Schnitt eine besonders günstige Ausführungsform gezeigt, und zwar mit einem Gassensor, der eine Diffusionsbarriere benötigt. Der Filter 6 hat wieder die oben genannten Eigenschaften und liegt von der Gaszufuhr-Anordnung 5 aus gesehen vor der Öffnung im Gehäusedeckel 12. Die zum Sensorelement 3 hin liegende Seite des Filters 6 ist mit der Diffusionsbarriere 21 versehen oder als solche ausgebildet.

Das im Gasgemisch enthaltene, zu messende Gas gelangt auch bei der Ausführungsform nach Fig. 11 zunächst aus der Gaszufuhr-Anordnung 5 durch die Öffnungen 41, 51 hindurch zum Filter 6 und nach dessen Durchtritt dann durch die Diffusionsbarriere 21 und den Gas-Ein/Auslaß 2 im Gehäusedeckel 12 hindurch zum Sensorelement 3.

Die Fig. 12 zeigt, daß auch eine Anordnung nach Fig. 5 mit einem in Gehäusetopf 11 und Gehäusedeckel 12 geteilten Gehäuse realisiert werden kann. Über das Zwischenelement 4 sind Gehäusedeckel 12 und Gehäusetopf 11 mit der Gaszufuhr-Anordnung 5 auch in Richtung der fluchtenden beiden Hauptachsen 13, 43 dauernd mechanisch fest, jedoch leicht lösbar verbunden.

In Fig. 12 ist schematisch im Schnitt eine besonders günstige Ausführungsform gezeigt, und zwar mit einem Gassensor, der eine Diffusionsbarriere benötigt. Der Filter 6 hat wieder die oben genannten Eigenschaften und liegt von der Gaszufuhr-Anordnung 5 aus gesehen vor der Öffnung im Gehäusedeckel 12. Die zur Gaszufuhr-Anordnung 5 hin liegende Seite des Filters 6 ist mit der Diffusionsbarriere 21 versehen oder als solche ausgebildet. Es kann aber auch eine vom Filter 6 getrennte Diffusionsbarriere vorgesehen sein.

Das im Gasgemisch enthaltene, zu messende Gas gelangt auch bei der Ausführungsform nach Fig. 12 zunächst aus der Gaszufuhr-Anordnung 5 durch die Öffnungen 41, 51 hindurch zur Diffusionsbarriere 21 und nach deren Durchtritt dann durch den Filter 6 und den Gas-Ein/Auslaß 2 im Gehäusedeckel 12 hindurch zum Sensorelement 3.
Somit können bei den Ausführungsbeispielen der Fig. 11 und 12 der Filter 6 und der Gassensor 10 infolge der erwähnten dauernd mechanisch festen, jedoch leicht lösbaren Befestigung jeweils allein oder zusammen ausgewechselt werden.

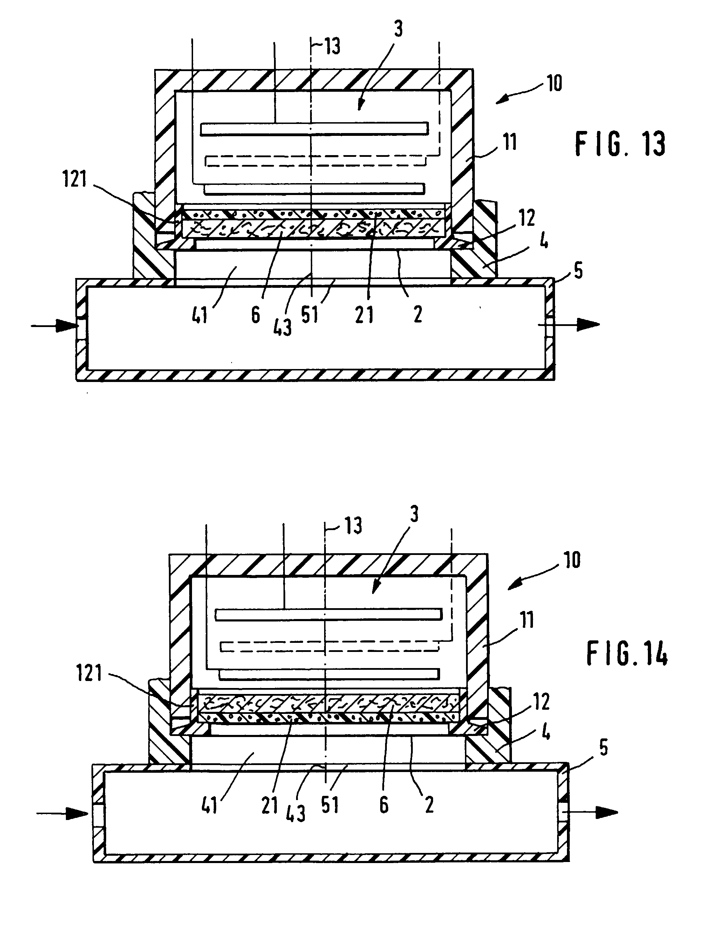

Die Fig. 13 zeigt, daß auch eine Anordnung nach Fig. 6 mit einem in Gehäusetopf 11 und Gehäusedeckel 12 geteilten Gehäuse realisiert werden kann. Über das Zwischenelement 4 sind Gehäusedeckel 12 und Gehäusetopf 11 mit der Gaszufuhr-Anordnung 5 auch in Richtung der fluchtenden beiden Hauptachsen 13, 43 dauernd mechanisch fest, jedoch leicht lösbar verbunden.

In Fig. 13 ist schematisch im Schnitt eine weitere besonders günstige Ausführungsform gezeigt, und zwar wiederum mit einem Gassensor, der eine Diffusionsbarriere benötigt. Der Filter 6 hat wieder die oben erwähnten Eigenschaften, ist nun aber an der Innenseite des Gehäusedeckels 12 angebracht und von dieser gehaltert. Dies geschieht, wie in Fig. 13 zu sehen ist, zweckmäßigerweise durch den verlängerten Innenrand 121 des Gehäusedeckels 12.

Der Filter 6 ist auf einer dem Sensorelement 3 zugewandten Seite mit der Diffusionsbarriere 21 für das Gasgemisch versehen oder entsprechend ausgebildet, während die Öffnung im Gehäusedeckel selbst keine Diffusionsbarriere darstellt.

Das im Gasgemisch enthaltene, zu messende Gas gelangt bei der Ausführungsform nach Fig. 13 zunächst aus der Gaszufuhr-Anordnung 5 durch die Öffnungen 41, 51 und den Gas-Ein/Auslaß 2 hindurch zum Filter 6 und nach dessen Durchtritt dann durch die Diffusionsbarriere 21 hindurch zum Sensorelement 3.

Die Fig. 14 zeigt, daß auch eine Anordnung nach Fig. 7 mit einem in Gehäusetopf 11 und Gehäusedeckel 12 geteilten Gehäuse realisiert werden kann. Über das Zwischenelement 4 sind Gehäusedeckel 12 und Gehäusetopf 11 mit der Gaszufuhr-Anordnung 5 auch in Richtung der fluchtenden beiden Hauptachsen 13, 43 dauernd mechanisch fest, jedoch leicht lösbar verbunden.

Der Filter 6 ist auf einer der Gaszufuhr-Anordnung 5 zugewandten Seite mit der Diffusionsbarriere 21 für das Gasgemisch versehen oder entsprechend ausgebildet, und die Öffnung im Gehäusedeckel selbst stellt keine Diffusionsbarriere dar.

Das im Gasgemisch enthaltene, zu messende Gas gelangt bei der Ausführungsform nach Fig. 14 zunächst aus der Gaszufuhr-Anordnung 5 durch die Öffnungen 41, 51 und den Gas-Ein/Auslaß 2 hindurch zur Diffusionsbarriere 21 und nach deren Durchtritt dann durch den Filter 6 hindurch zum Sensorelement 3.

Bei den Ausführungsbeispielen der Fig. 13 und 14 können im Bedarfsfall der Filter 6 und die Diffusionsbarriere 21 zusammen mit Gehäusedeckel 12 entnommen und dann der Filter 6 und/oder die Diffusionsbarriere 21 infolge der erwähnten dauernd mechanisch festen, leicht lösbaren Befestigung ausgewechselt werden.

Für einen dichten, trotzdem aber lösbaren Sitz des Gehäusedeckels 12 im Gehäusetopf 11 kann bei den Gassensor-Anordnungen nach den Fig. 8 bis 12 bei 60 jeweils ein nicht dargestellter O-Ring vorgesehen sein.

Nachdem die Fig. 1 bis 14 und deren Erläuterung dem prinzipiellen Aufbau der Gassensor-Anordnung der Erfindung galten, soll nun deren weiterer wichtiger Aspekt, nämlich die erwähnte dauernd mechanisch feste, jedoch leicht lösbare Befestigung von Gassensor 10 mittels des Zwischenelements 4 an der Gaszufuhr-Anordnung 5 erläutert und beschrieben werden. Hierzu dienen die Fig. 15 bis 19, in denen nur noch die jeweiligen, die Art der speziellen Befestigung betreffenden Teile der Gassensor-Anordnung 10 dargestellt sind. Dabei ist aus Vereinfachungsgründen auf die Darstellung des möglichen Gehäusedeckels jeweils verzichtet.

So zeigt die Fig. 15 schematisch im Schnitt, daß die auch in Richtung der fluchtenden beiden Hauptachsen 13, 43 dauernd mechanisch feste, jedoch leicht lösbare Befestigung mittels einer Gewindeverbindung 7 von Gehäuse 1 bzw. Gehäusetopf 11 und Zwischenelement 4 erfolgt. Die Gewindeverbindung 7 kann z.B., wie dargestellt, aus einem mindestens an der dem Gas-Ein/ Auslaß 2 zugewandten Außenseite von Gehäuse 1 bzw. Gehäusetopf 11 angebrachten Schraubengewinde und einem damit korrespondierenden Mutterngewinde im Zwischenelement 4 bestehen. Es ist jedoch auch möglich, die Gewindeverbindung an anderen geeigneten Stellen von Gehäuse 1 bzw. Gehäusetopf 11 und Zwischenelement 4 vorzusehen.

Die Fig. 16 zeigt schematisch im Schnitt, daß die auch in Richtung der fluchtenden beiden Hauptachsen 13, 43 dauernd mechanisch feste, jedoch leicht lösbare Befestigung alternativ zur Gewindeverbindung nach Fig. 15 ferner mittels eines Bajonettverschlusses 8 erfolgen kann, von dem ein erster Teil am Gehäuse 1 bzw. Gehäusetopf 11 und ein zweiter Teil am Zwischenelement 4 vorgesehen ist.

Die Fig. 17 zeigt schematisch im Schnitt, daß die auch in Richtung der fluchtenden beiden Hauptachsen 13, 43 dauernd mechanisch feste, jedoch leicht lösbare Befestigung alternativ zur Gewindeverbindung nach Fig. 15 oder dem Bajonettverschluß nach Fig. 16 ferner mittels eines Schnappverschlusses 9 erfolgen kann, der an das Zwischenelement 4 angeformt ist und der das Gehäuse 1 bzw. den Gehäusetopf 11 jeweils allein oder das Gehäuse 1 bzw. den Gehäusetopf 11 zusammen mit dem Filter 6 im eingerasteten Zustand umgreift.

Bevorzugt hat der Schnappverschluß 9 zwei längliche, federnde Verschlußelemente 91, 92, die sich am Umfang des Zwischenelements 4 diametral gegenüberliegen und somit gegeneinander um 180° versetzt sind. Verschlußelemente 91, 92 und Zwischenelement 4 bilden somit ein einheitliches Bauteil.

Sollten die beiden Verschlußelemente 91, 92 für eine dauernd sichere Verbindung von Gassensor 10 und Zwischenelement 6, gegebenenfalls unter Zwischenlage des Filters 4, nicht ausreichen, z.B. wenn die Gassensor-Anordnung im Betrieb Vibrationen ausgesetzt ist, so können auch weitere Verschlußelemente, insb. ein drittes, vorgesehen werden. Diese drei Verschlußelemente sind dann unter einem gegenseitigen jeweiligen Winkel von 120° am Umfang des Gassensors 10 anzuordnen.

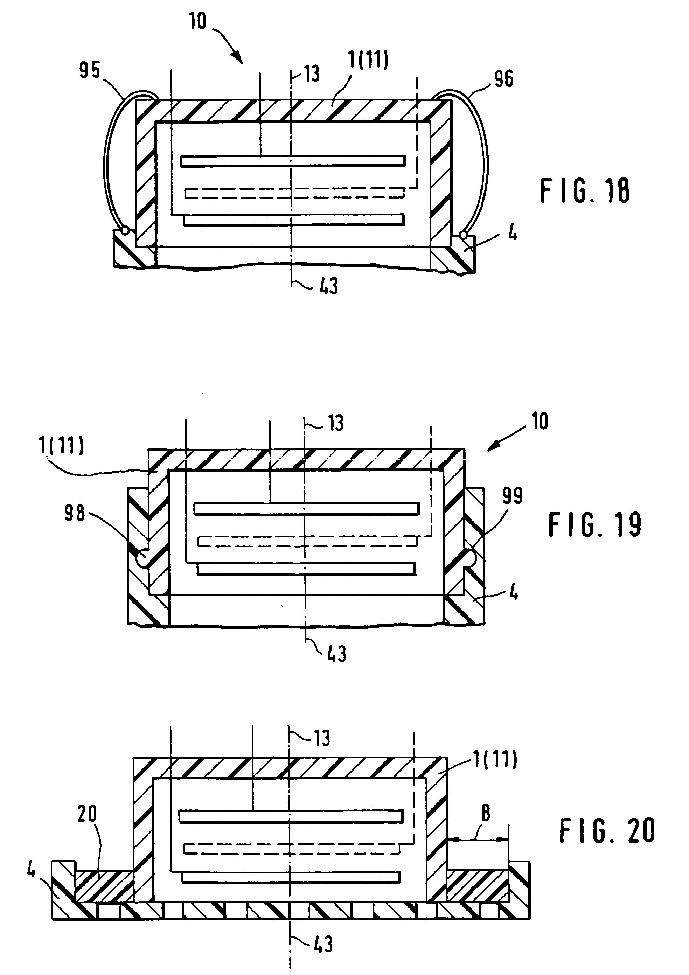

Die Fig. 18 zeigt schematisch im Schnitt, daß die auch in Richtung der fluchtenden beiden Hauptachsen 13, 43 dauernd mechanisch feste, jedoch leicht lösbare Befestigung alternativ zur Gewindeverbindung nach Fig. 15, zum Bajonettverschluß nach Fig. 16 oder zum Schnappverschluß nach Fig. 17 ferner mittels mindestens zweier klappbarer Bügelfedern 95, 96 erfolgen kann, die den Gassensor bzw. den Gassensor und den Filter im verbundenen Zustand umgreifen und deren jeweiliger Dreh- und Angelpunkt am Zwischenelement 4 vorgesehen ist.

Bei zwei vorhandenen Bügel federn liegen diese am Umfang des Zwischenelements 4 diametral gegenüber und sind somit gegen einander um 180° versetzt. Bei drei vorgesehenen Bügelfedern, was wieder bei vibrations-gefährdetem Einsatzort der Gassensor-Anordnung erforderlich sein kann, beträgt dieser Winkel 120°.

Die Fig. 19 zeigt schematisch im Schnitt, daß die auch in Richtung der fluchtenden beiden Hauptachsen 13, 43 dauernd mechanisch feste, jedoch leicht lösbare Befestigung alternativ zur Gewindeverbindung nach Fig. 15, zum Bajonettverschluß nach Fig. 16, zum Schnappverschluß nach Fig. 17 oder zu den klappbaren Bügelfedern nach Fig. 18 auch mittels am Gassensor 10 angeordneten seitlichen Vorsprüngen 98 erfolgen kann, die in entsprechende seitliche Vertiefungen 99 des Zwischenelements 4 einrasten, oder umgekehrt.

Besonders günstig ist es, wenn diese Form der erwähnten dauernd mechanisch Resten, jedocn leicht lösbaren Verbindung nach Art eines Kugelverschlusses ausgebildet wird. Dabei ist in jeden der Vorsprünge 98 eine federnd gelagerte und/oder gehalterte Kugel integriert, die beim Verbinden in die entsprechende Vertiefung 99 einrastet und beim Lösen der Verbindung nachgibt.

Eine andere besonders günstige Form der Anordnung nach Fig. 19 besteht darin, daß die Vorsprünge als ein Ringwulst und die Vertiefungen als eine zum Ringwulst passende Ringnut ausgebidet sind. Diese dauernd mechanisch feste Verbindung kann dadurch leicht von Hand gelöst werden, daß der Gassensor 10 gegen das Zwischenelement 4 leicht gekippt wird, so daß die beiden Hauptachsen nicht mehr fluchten. Dadurch löst sich der Ringwulst aus der Ringnut, so daß der Gassensor durch Ziehen vom Zwischenelement gettrennt werden kann.

Die Fig. 20 zeigt schließlich, in welcher Weise die Gassensor-Anordnung zu einem System erweitert werden kann, mit dem zylindrische Gassensoren 10 mit von Exemplar zu Exemplar unterschiedlichem Außen-Durchmesser, dessen Werte zwischen einem Maximalwert und einem Minimalwert liegen, mit einem jeweiligen zylindrischen Zwischenelement eines konstanten Innen-Durchmessers kombiniert werden können.

Hierzu hat das jeweilige Zwischenelement 4 immer einen Innen-Durchmesser, der gleich dem Maximalwert ist, und es ist jeweils ein Zwischenring 20 vorgesehen, dessen radiale Breite B gleich der Differenz zwischen dem Maximalwert des Innen-Durchmessers des Zwischenelements 4 und dem jeweiligen Außen-Durchmesser des Gassensors 10 ist. Solche Gassensoren mit jeweils unterschiedlichem Außen-Durchmesser können z.B. von verschiedenen Lieferanten stammen.

Abschließend ist noch darauf hinzuweisen, daß, wie es lediglich in Fig. 20 gezeigt ist und falls es für die mechanische Stabilität des Zwischenelements erforderlich ist, dessen Grundfläche geeignet verteilte Gasdurchtrittsöffnungen haben sollte und nicht eine einzige zentrale Öffnung, wie sie bei den Fig. 3 bis 19 vorausgesetzt ist.

## Patentansprüche

1. Elektrochemische Gassensor-Anordnung, die
- einen eine erste Hauptachse aufweisenden Gassensor (10) und
- ein eine mit der ersten Hauptachse fluchtende zweite Hauptachse aufweisendes Zwischenelement (4) umfaßt,
-- welcher Gassensor in einem Gehäuse (1) mit einem Gas-Ein/Auslaß (2) ein Sensorelement (3) enthält,
--- das einen Elektrolyten (31) sowie mindestens eine Arbeitselektrode (32) und eine Referenz/Gegenelektrode (33) mit einer jeweiligen äußeren Zuleitung (32', 33') umfaßt, und
-- über welches Zwischenelement der Gassensor an einer Gaszufuhr-Anordnung (5) für ein Gasgemisch, das ein zu messendes Gas enthält, auch in Richtung der fluchtenden Hauptachsen dauernd mechanisch fest, jedoch leicht lösbar, ohne dazu ein Hilfsmittel benutzen zu müssen, befestigt ist.

2. Elektrochemische Gassensor-Anordnung nach Anspruch 1 mit einem Filter (6),
- der das mit der Gassensor-Anordnung zu messende Gas im wesentlichen passieren läßt, dagegen andere Gase, für die das Sensorelement (3) zusätzlich zum zu messenden Gas auch empfindlich ist, praktisch zurückhält, und
- der zwischen dem Gas-Ein/Auslaß (2), der keine Diffusionsbarriere für das zu messende Gas darstellt, und dem Zwischenelement (4) angeordnet ist.

3. Elektrochemische Gassensor-Anordnung nach Anspruch 2, bei dem der Filter (6) auf einer der Gaszufuhr-Anordnung (5) oder dem Sensorelement (3) zugewandten Seite mit einer Diffusionsbarriere (21) für das Gasgemisch versehen ist.

4. Elektrochemische Gassensor-Anordnung nach Anspruch 1, mit einem Filter (6),
- der das mit der Gassensor-Anordnung zu messende Gas im wesentlichen passieren läßt, dagegen andere Gase, für die das Sensorelement (3) zusätzlich zum zu messenden Gas auch empfindlich ist, praktisch zurückhält, und
- der zwischen dem Gas-Ein/Auslaß (2), der als Diffusionsbarriere (21) für das zu messende Gas ausgebildet ist, und dem Zwischenelement (4) angeordnet ist.

5. Elektrochemische Gassensor-Anordnung nach Anspruch 1 mit einem Filter (6),
- der das mit der Gassensor-Anordnung zu messende Gas im wesentlichen passieren läßt, dagegen andere Gase, für die das Sensorelement (3) zusätzlich zum zu messenden Gas auch empfindlich ist, praktisch zurückhält und
- der innerhalb des Gassensors (10) zwischen dessen Gasein/Auslaß (2), der als Diffusionsbarriere (21) für das Gasgemisch ausgebildet ist, und dem Sensorelement (3) angeordnet ist oder
- der innerhalb des Gassensors (10) zwischen dessen Gasein/Auslaß (2), der keine Diffusionsbarriere für das Gasgemisch darstellt, und dem Sensorelement (3) angeordnet ist,
-- in welchem Fall der Filter (6)
--- entweder ebenfalls keine Diffusionsbarriere aufweist
--- oder auf einer der Gaszufuhr-Anordnung (5) oder dem Sensorelement (3) zugewandten Seite mit einer Diffusionsbarriere (21) für das Gasgemisch versehen ist.

6. Elektrochemische Gassensor-Anordnung nach einem der Ansprüche 1 bis 5, bei der der Gassensor (10) und das Zwischenelement (4) mittels einer Gewindeverbindung (7), insb. mittels eines Schraubengewindes am Gassensor und mittels eines dazu passenden Mutterngewindes am Zwischenelement, auch in Richtung der fluchtenden Hauptachsen (13, 43) dauernd mechanisch fest, jedoch leicht lösbar, ohne dazu ein Hilfsmittel benutzen zu müssen, verbunden sind.

7. Elektrochemische Gassensor-Anordnung nach einem der Ansprüche 1 bis 5, bei der der Gassensor (10) mit einem ersten Teil eines Bajonettverschlusses (8) und das Zwischenelement (4) mit einem zugehörigen zweiten Teil des Bajonettverschlusses versehen ist.

8. Elektrochemische Gassensor-Anordnung nach einem der Ansprüche 1 bis 5, bei der das Zwischenelement (4) mit einem Schnappverschluß (9) versehen ist, der den Gassensor (10) bzw. den Gassensor und den Filter (6) im eingerasteten Zustand umgreift.

9. Elektrochemische Gassensor-Anordnung nach einem der Ansprüche 1 bis 5, bei der das Zwischenelement (4) mit klappbaren Bügelfedern (95, 96) versehen ist, die den Gassensor (10) bzw. den Gassensor und den Filter (6) im verbundenen Zustand umgreifen.

10. Elektrochemische Gassensor-Anordnung nach einem der Ansprüche 1 bis 5, bei der der Gassensor (10) seitlich mit, insb. federnden, Vorsprüngen (98) versehen ist, die in entsprechende seitliche Vertiefungen (99) des Zwischenelements (4) einrasten, oder umgekehrt.

11. Elektrochemische Gassensor-Anordnung nach Anspruch 10, bei der die Vorsprünge als ein Ringwulst und die Vertiefungen als eine zum Ringwulst passende Ringnut ausgebidet sind.

12. Elektrochemische Gassensor-Anordnung nach einem der Ansprüche 1 bis 11 mit einem zylindrischen Gassensor und mit einem zylindrischen Zwischenelement.

13. Elektrochemische Gassensor-Anordnung nach einem der Ansprüche 1 bis 12, bei dem das Gehäuse (1) aus einem Gehäusetopf (11) und einem Gehäusedeckel (12) besteht.

14. Elektrochemische Gassensor-Anordnung nach den Ansprüchen 5 und 12, bei dem der Filter (6) an oder in einer Innenseite des Gehäusedeckels (12) gehaltert ist.

15. System elektrochemischer Gassensor-Anordnungen nach einem der Ansprüche 12 bis 14 für Gassensoren, die von Exemplar zu Exemplar unterschiedliche Außen-Durchmesser haben, deren Werte zwischen einem Maximalwert und einem Minimalwert liegen,
- mit einem Zwischenelement (4), dessen Innen-Durchmesser gleich dem Maximalwert ist, und
- mit einem jeweiligen Zwischenring (20), dessen radiale Breite (B) gleich der Differenz zwischen dem Maximalwert des Innen-Durchmessers des Zwischenelements und dem jeweiligen Außen-Durchmesser des Gassensors ist.
